# EUROPÄISCHE PATENTSCHRIFT

(11) **EP 1 025 268 B1**
(45) Veröffentlichungstag und Bekanntmachung des Hinweises auf die Patenterteilung: **08.05.2002**
(21) Anmeldenummer: 98945320.4
(22) Anmeldetag: 09.09.1998
(51) Int. Cl.: C21D 8/12

(54) **VERFAHREN ZUR HERSTELLUNG VON KORNORIENTIERTEM ELEKTROBLECH MIT GERINGEM UMMAGNETISIERUNGSVERLUST UND HOHER POLARISATION**
METHOD FOR PRODUCING A MAGNETIC GRAIN ORIENTED STEEL SHEET WITH LOW LEVEL LOSS BY MAGNETIC REVERSAL AND HIGH POLARISATION
PROCEDE DE PRODUCTION D'UNE TOLE ELECTRIQUE A GRAINS ORIENTES AVEC UNE FAIBLE PERTE PAR INVERSION MAGNETIQUE ET UNE POLARISATION ELEVEE

(30) Priorität: 15.10.1997 DE 19745445
(43) Veröffentlichungstag der Anmeldung: 09.08.2000
(73) Patentinhaber: ThyssenKrupp Stahl AG, 47166 Duisburg (DE)
(72) Erfinder: PIRCHER, Hans, D-45481 Mülheim (DE); KAWALLA, Rudolf, D-09627 Bobritzsch (DE); ESPENHAHN, Manfred, D-45259 Essen (DE); BÖTTCHER, Andreas, D-47259 Duisburg (DE); GÜNTHER, Klaus, D-46562 Voerde (DE); HUNEUS, Hans, D-44627 Herne (DE); WUPPERMANN, Carl-Dieter, D-47803 Krefeld (DE)
(74) Vertreter: Simons, Johannes, Dipl.-Ing.
(86) Internationale Anmeldenummer: EP9805732
(87) Internationale Veröffentlichungsnummer: WO9919521

(56) Entgegenhaltungen:
- EP-A- 0 219 611
- EP-A- 0 619 376
- DE-C- 19 628 136
- DE-C- 19 628 137
- PATENT ABSTRACTS OF JAPAN vol. 008, no. 118 (C-226), 31. Mai 1984 & JP 59 031823 A (KAWASAKI SEITETSU KK), 21. Februar 1984

## Beschreibung

Die Erfindung betrifft ein Verfahren zur Herstellung von kornorientiertem Elektroblech mit geringem Ummagnetisierungsverlust und hoher Polarisation.

Bei der konventionellen Herstellung von kornorientierten Elektroblechen (KO-Blech) werden Stähle mit 2,5 bis 4,0 % Si, 0,010 bis 0,100 % C, bis zu 0,150 % Mn, bis zu 0,065 % Al und bis zu 0,0150 % N, sowie jeweils optional 0,010 bis 0,3 % Cu, bis 0,060 % S, bis 0,100 % P, bis jeweils 0,2 % As, Sn, Sb, Te, und Bi, Rest Eisen und unvermeidbare Verunreinigungen erschmolzen und abgegossen. Die erstarrten Stränge mit Dicken von 25 bis zu 100 mm werden, ohne unter 700 °C abzukühlen, in Dünnbrammen zerteilt und in einem in Linie stehenden Ausgleichsofen auf eine Temperatur von bis zu 1170 °C homogen durcherwärmt, wobei die Verweilzeit bis maximal 60 min beträgt. Diese homogen durcherwärmten Dünnbrammen werden dann in einer mehrgerüstigen Warmwalzstraße kontinuierlich zu Warmband mit einer Dicke von 0,5 bis 3,0 mm ausgewalzt und gehaspelt. Das Warmband wird schließlich optional geglüht. Das so behandelte Warmband wird in einem oder in mehreren Durchgängen auf Fertigbanddicke von 0,15 bis 0,50 mm kaltgewalzt. Das Kaltband wird rekristallisierend und entkohlend geglüht. Anschließend wird es nach dem Aufbringen eines überwiegend MgO enthaltenden Glühseparators in einer Hochtemperaturglühung sekundär-rekristallisierend geglüht, wobei sich eine sehr scharfe Gosstextur einstellt. Schließlich wird es in einer Schlußglühung isoliert und von inneren Restspannungen befreit.

Kornorientierte Elektrobleche werden insbesondere in Leistungstransformatoren zur Führung des magnetischen Flusses verwendet. Deshalb sind möglichst niedrige Ummagnetisierungsverluste und möglichst hohe Polarisationswerte notwendig. Zu diesem Zweck wird in kornorientierten Elektroblechen eine sehr scharf ausgeprägte Gosstextur gezielt erzeugt, wodurch entlang der Walzrichtung als magnetischer Vorzugsrichtung sehr gute magnetische Eigenschaften erreicht werden.

Seit mehr als 20 Jahren beginnt die Erzeugung von Stahlflachprodukten mit dem kontinuierlichen Vergießen von Schmelzen über die Stranggußtechnik. Dabei wird die Schmelze in eine Kokille gegossen, aus der sie als erstarrender Strang von etwa 100 bis 300 mm Dicke austritt. Anschließend wird der Strang zumeist aus der Senkrechten in einem Bogen in die Waagerechte geführt und dabei gekühlt. Nach dem Verlassen der Stranggießanlage wird der Strang in einzelne Brammen aufgeteilt. Einfache Flußstahlbrammen werden normalerweise in einem Brammenlager aufbewahrt, wo sie bis auf die Umgebungstemperatur abkühlen. Brammen für kornorientiertes Elektroblech, die mit 2,5 bis 4,0 % Si legiert sind, müssen dagegen bei höheren Temperaturen gelagert werden, da sie eine große Anfälligkeit besitzen, beim Wiederaufheizen vor dem Warmbandwalzen Risse zu bilden, wenn sie zuvor auf zu niedrige Temperaturen abgekühlt worden sind. Hier erweist sich die hohe Brammendicke des konventionellen Stranggießprozesses als besonders nachteilig, da sie hohe und inhomogene Temperaturgradienten beim Wiederaufheizen der Brammen bewirkt, die zu großen inneren Spannungen führen. Brammen für KO-Blech müssen deshalb üblicherweise in beheizten Warmhalteöfen bei Temperaturen von beispielsweise 100 bis 500 °C gelagert werden. Die Nachteile dieser Arbeitsweise sind der erhöhte Energieaufwand und die Verkomplizierung und Verteuerung *des* Verarbeitungsprozesses.

Anschließend werden die über den konventionellen Stranggießprozess erzeugten Brammen in einen Stoßofen, einen Hubbalkenofen oder in ein in seiner Wirkung gleichwertiges Aggregat eingesetzt und auf ausreichend hohe Temperaturen erwärmt, so daß eine gute Warmumformbarkeit erreicht wird. Das Warmwalzen geschieht dann üblicherweise in zwei Teilschritten: Die 100 bis 300 mm dicken Brammen werden zunächst auf eine Dicke von rd. 30 bis 60 mm vorgewalzt. Dieses Vorwalzen geschieht häufig in Reversiergerüsten. Die Vorbrammen werden dann in einer mehrgerüstigen Fertigstaffel kontinuierlich zu Warmband in Dicken von 2,0 bis 6,0 mm ausgewalzt.

KO-Blech, das nach den konventionellen Verfahren hergestellt wird, hat die Besonderheit, daß eine Erwärmung der Brammen auf Temperaturen bis zu 1400 °C zwingend notwendig ist, um Fremdphasen-Partikel in der Bramme aufzulösen, so daß diese bei der nachfolgenden Warmwalzung feindispers ausgeschieden werden können (US 2 599 340). Bei einem bekannten Verfahren beispielsweise handelt es sich bei diesen Teilchen hauptsächlich um Mn-Sulfide oder Mn-Selenide (J.E. May und D. Turnbull: Trans. AIME, 212 (1958), 769). Bei einem anderen Verfahren werden zusätzlich Al-Nitride (US 3 159 511; US 3 287 183) erzeugt. Bei einem weiteren Verfahren werden MnSe und MnSb (DE 23 51 141 A) erzeugt. Weiterhin bekannt sind auch andere Nitride wie VN, (Al, Si)N,...(DE 19 20 666 A, EP 0 219 611) und Sulfide wie Cu₂S, TiS, CrS,...(EP 0 619 376 Al, DE 23 48 249 A). Die Aufgabe dieser Teilchen ist generell, in den nachfolgenden Fertigungsschritten bis vor die Sekundärrekristallisation die Bewegung von Korngrenzen zu blockieren und somit das normale Kornwachstum während verschiedener Glühbehandlungen zu hemmen. Deswegen werden sie als Kornwachstums-Inhibitoren bezeichnet. Nur diejenigen Partikel aus einer Verteilung unterschiedlich großer Teilchen, die kleiner als ca. 100 nm sind, können die Bewegung der Korngrenzen ausreichend behindern und als Inhibitoren fungieren. Bei der Hochtemperaturglühung schließlich steuern die Inhibitoren den Prozeß der Sekundärrekristallisation, welcher zur Bildung der gewünschten sehr scharfen Gosstextur führt.

Nach dem Gießen und Erstarren sind beim konventionellen Stranggießen die Ausscheidungen meist derart grob, daß praktisch keine Teilchen unterhalb einer Größe von 100 nm existieren. Deshalb müssen die groben Partikel während der Brammenvorwärmung aufgelöst werden. Im Fall der Mn-Sulfide sind dazu Glühtemperaturen bis ca. 1400 °C erforderlich. Beim anschließenden Warmwalzen mit geeignet eingestellten Parametern (Stichpläne und Umformtemperaturen in den verschiedenen Gerüsten, Abkühlung) werden die Teilchen in der gewünschten Weise wieder ausgeschieden.

Das Erwärmen der Brammen auf die für die Auflösung der als Kornwachstums-Inhibitoren wirkenden Teilchen erforderliche hohe Temperatur kann entweder direkt in einem Ofen oder in zwei Öfen nacheinander geschehen. Im letzteren Fall werden die Brammen im ersten Ofen beispielsweise auf 1250 °C erwärmt, im zweiten Ofen dann auf Temperaturen bis zu 1400°C. Obwohl es den Prozeßablauf komplizierter macht und ihn verteuert, hat es sich als vorteilhaft für die magnetischen Eigenschaften des Fertigproduktes erwiesen, zwischen diesen beiden Stufen eine erste Warmumformung der Bramme ("Prerolling") zur Homogenisierung und Verfeinerung ihrer Gefügestruktur vorzunehmen (EP 0 193 373 B1).

Die für die Bildung der Inhibitorphase notwendige hohe Brammenvorwärmtemperatur erschwert und verteuert den Fertigungsprozeß für das Warmband für KO-Blech, weil Investitionen für spezielle, aufwendige Hochtemperaturöfen erforderlich sind, weil der auf Siliziumstahl-Brammen oberhalb von 1350 °C auftretende flüssige Zunder den Ofenherd schädigt und dieses mit Verletzungen an den Brammenunterseiten verbunden ist, die Ausbringensverluste bewirken. Auch das optional zwischengeschaltete Prerolling verteuert die Produktion ünd verdrängt Kapazität, die man zur Herstellung anderer Stahlflachprodukte nutzen könnte.

MnS- oder MnSe-Partikel haben für die Kornwachstumshemmung nur eine begrenzte Wirkung. Ihr darf nur eine entsprechend angepaßte treibende Kraft zur Kornvergrößerung entgegenstehen, damit der gewünschte Goss-Selektionsprozeß im richtigen Moment während der Sekundärrekristallisation stattfinden kann. Dieses bedeutet, daß der Umformungsgrad bei der letzten Kaltwalzstufe auf Enddicke nicht zu groß sein darf. Die günstigste Dickenabnahme in dieser Kaltwalzstufe des mit MnS- bzw. MnSe-inhibierten Si-Stahls liegt bei 40 bis 60 %. Da die Warmbanddicke mit der herkömmlichen Warmwalztechnik nur schwierig ohne Qualitäts- und Ausbringensverluste unter 2,0 mm abzusenken ist, muß der optimale Umformungsgrad beim Kaltwalzen auf Enddicke durch Walzen in mehreren Stufen realisiert werden, zwischen denen eine rekristallisierende Zwischenglühung liegt. Das auf diesem aufwendigen Weg erzeugbare KO-Blech besitzt Fehl-orientierungswinkel bis zu ca. 10° bezüglich der exakten Gosslage.

Eine Weiterentwicklung des vorerwähnten Verfahrens, das zu noch geringeren Fehlorientierungen und damit zu verbesserten magnetischen Eigenschaften führt, ist das sogenannte Hi-B-Verfahren (US 3 159 511, US 3 287 183), bei dem zusätzlich zu MnS AlN-Partikel als weitere Inhibitorphase verwendet wird. Es hat wie das erstgenannte Verfahren den Nachteil, daß zur Auflösung der MnS-Partikel hohe Brammenerwärmungstemperaturen von z.B. 1400 °C erforderlich sind. Das AlN liegt nach dem Warmbandwalzen noch nicht in geeignet feindisperser Partikelverteilung vor, sondern erreicht diese erst durch eine Ausscheidungsglühung des Warmbandes mit anschließender Abschreckung. Die innere Beschaffenheit des Warmbandes hinsichtlich seiner chemischen Zusammensetzung, der Ausbildung seines Korngefüges und der Morphologie seiner Zweitphasenanteile muß also derart sein, daß es die Fähigkeit zur Ausscheidung von AlN-Inhibitorphasenteilchen besitzt. Durch die AlN-Partikel wird die Kornwachstumsinhibition insgesamt verstärkt.

Dies ermöglicht in vorteilhafter Weise einen nur einstufigen Kaltwalzvorgang mit höherem Umformgrad. Die dadurch erhöhte in der Matrix gespeicherte Energie steht nun im Gleichgewicht zu einer stärkeren Inhibition, wodurch sich die Selektion bei der Sekundärrekristallisation verbessert. Das Resultat sind eine schärfere Gosstextur (Fehlorientierungswinkel zur exakten Gosslage nur 3 bis 5°) und damit bessere magnetische Eigenschaften.

Um die durch die hohe Brammenvorwärmtemperatur bedingten Nachteile der oben beschriebenen konventionellen Verfahren zu überwinden, wurden in den letzten Jahren mehrere neue Herstellungsprozesse für kornorientiertes Elektroblech entwickelt, bei denen die erforderliche Brammentemperatur auf Werte unterhalb 1330 °C abgesenkt wurde. Von diesen "Low Heating"-Verfahren seien im folgenden zwei herausgegriffen, die in die industrielle Praxis eingeführt wurden, und zum neuesten Stand der Technik gehören.

Das Verfahren gemäß EP 0 219 611 arbeitet gänzlich ohne sulfidische Inhibitoren. Der S-Gehalt kann daher bis auf Spurenniveau abgesenkt werden. Die Brammenvorwärmtemperatur liegt mit Werten unterhalb von 1200 °C ganz besonders tief. Die Bildung einer ausreichend wirksamen Inhibitorphase, die bereits im Warmband fertig vorliegt, ist dabei nicht möglich. Ein solches über die herkömmliche Stranggießtechnik erzeugtes Warmband besitzt auch nicht die Fähigkeit, über eine Ausscheidungsglühung entsprechende Inhibitorphase zu bilden. Der Inhibitor AlN wird deshalb durch Nitrieren des auf Fertigbanddicke kaltgewalzten Bandes vor der Hochtemperaturglühung gebildet. In der EP 0 321 695 B1 werden verschiedene Methoden angegeben, mit denen ein solcher Nitriervorgang bewerkstelligt werden kann.

Ein anderes Verfahren (EP 0 619 376 A1) verwendet Cu-Sulfide als Inhibitor. Diese weisen eine deutlich niedrigere Löslichkeitstemperatur und eine schnellere Löslichkeitskinetik auf als AlN und MnS. Die Inhibitorbildung erfolgt zwar beim Warmwalzen noch nicht in der richtigen Weise, jedoch besitzt das nach diesem Verfahren hergestellte Warmband die Fähigkeit zur Ausscheidung von Cu-Sulfid-Inhibitorpartikeln. Diese werden während einer Ausscheidungsglühbehandlung des warmgewalzten Bandes erzeugt.

Die bisher beschriebene konventionelle Herstellung von Warmband aus stranggegossenen Brammen ist technologisch recht aufwendig und zudem zeit- und kostenintensiv. Deshalb laufen heute bei vielen Stahlherstellern Entwicklungen endabmessungsnaher Gießverfahren. Diese zielen auf Warmbanddicken unterhalb von 6 mm, oder sogar auf Fertigbanddicken bis hinab zu 0,01 mm (EP 0 417 318 B1). Kommerzielle Verfahren wurden realisiert für bestimmte Edelstahlsorten und für amorphe Werkstoffe. Die großtechnische Herstellung von KO-Blech mit 2,5 bis 4 % Si über Bandgießverfahren ist bisher noch nicht gelungen. Eines der Hauptprobleme ist es, bei der Erstarrung in den geringen Dicken und in der nachfolgenden Abkühlung gezielt geeignete Gefüge- und Ausscheidungsstrukturen zu erreichen, die nach weiteren Kaltumformungen und Wärmebehandlungen eine scharfe Gosstextur im Fertigprodukt entstehen lassen, so daß dieses hinsichtlich seiner magnetischen Eigenschaften wettbewerbsfähig ist mit dem über die herkömmliche Stranggießtechnik erzeugten kornorientierten Elektroblech (EP 0 390 160 B1, EP 0 540 405 B1).

Eine Erzeugung von Warmband über das Vergießen von Dünnbrammen und deren direktes Warmwalzen ist aus dem Stand der Technik bereits bekannt (z.B. EP 0 286 862 B1). Noch nicht gelöst wurde das Problem, diese Technik bei der Herstellung von kornorientiertem Elektroblech zu verwenden. Hierbei besteht die besondere Schwierigkeit, nicht nur ein hinsichtlich der mechanischen und technologischen Eigenschafen einwandfreies Produkt zu erzeugen, sondern auch die kornwachstumshemmende Inhibitorphase in der richtigen Weise zu bilden, damit das Fertigprodukt gute magnetische Eigenschaften aufweisen kann.

Aus der japanischen Offenlegung No. 56-158816 ist ein Verfahren bekannt, KO-Blech mit 2,54 bis 4 % Si über das kontinuierliche Gießen dünner Brammen mit Dicken von 3 bis 80 mm mit anschließendem Warmwalzen auf 1,5 bis 3,5 mm herzustellen unter Verwendung von MnS und MnSe als Hauptinhibitoren. Die höhere Warmbanddicke hat hier den Nachteil, daß die für kornorientiertes Elektroblech handelsüblichen Standard-Enddicken unterhalb von 0,35 mm nur durch Kaltwalzgrade oberhalb 76 % bei einstufigem Kaltwalzen oder durch konventionelles mehrstufiges Kaltwalzen mit Zwischenglühen herstellbar sind. Unvorteilhaft an dieser Arbeitsweise ist, daß der hohe Kaltumformgrad nicht auf die relativ schwache Inhibition durch MnS und MnSe abgestimmt ist. Das führt zu instabilen und unbefriedigenden magnetischen Eigenschaften des Fertigproduktes. Alternativ muß ein aufwendiger und teurer mehrstufiger Kaltwalzprozeß mit Zwischenglühungen in Kauf genommen werden. Auch findet keine Entkopplung der Gießgeschwindigkeit von der Durchlaufgeschwindigkeit durch den Ausgleichsofen statt. So ergibt sich der Nachteil einer geringeren Flexibilität in der Nutzung des Ausgleichsofens für eine gezielte Ausscheidung sulfidischer Inhibitoren.

Der Erfindung liegt die Aufgabe zugrunde, Nachteile der herkömmlichen Erzeugungswege zu überwinden und die wirtschaftlichen Vorteile des Dünnbrammengießens auch für kornorientiertes Elektroblech zu nutzen.

Die Lösung der gestellten Aufgabe erfolgt nach dem Verfahren gemäß Anspruch 1 durch eine Optimierung der Herstellungsschritte Gießen, Erstarren und Warmwalzen. Damit verbunden ist die Auswahl verschiedener Mechanismen zur Bildung der Inhibitorphase und der Anpassung der nachfolgenden Verarbeitungsschritte.

Bei dem erfindungsgemäßen Verfahren wird in ähnlicher Weise wie beim Stand der Technik eine Schmelze kontinuierlich in einer senkrecht stehenden Kokille vergossen, an deren Ende die Schmelze erstarrt und der so gebildete Strang über eine Kreisbogen in die Waagerechte überführt und dabei abgekühlt wird. Dieser Strang hat eine Dicke von nur 25 bis 100 mm, vorzugsweise 40 bis 70 mm. Er wird nicht vollständig abgekühlt, vielmehr sinkt seine Temperatur nicht unter 700 °C. Dieser heiße Strang wird in Dünnbrammen zerteilt, welche direkt durch einen in Linie stehenden Ausgleichsofen geführt werden, in welchem sie für maximal 60 Minuten, vorzugsweise für bis zu 30 Minuten, verweilen. Bei diesem Durchgang durch den Ausgleichsofen werden die Dünnbrammen homogen durcherwärmt und erreichen dabei eine verhältnismäßig niedrige Temperatur von maximal 1170 °C. Unmittelbar anschließend werden die Dünnbrammen durch eine in Linie stehende mehrgerüstige Warmwalzstaffel geführt, wo sie auf die Warmbanddicke von 0,5 bis 3,0 mm kontinuierlich warmgewalzt werden. Idealerweise wird die Warmbanddicke so gewählt, daß der nachfolgende Kaltwalzvorgang nur einstufig durchgeführt wird. Mit welchem Umformgrad dieses Kaltwalzen auszuführen ist, hängt von der jeweiligen in verschiedener Weise einstellbaren Inhibitorwirkung ab.

Der Vorteil der erfindungsgemäßen Arbeitsweise ist zum einen die Ausnutzung eines großen Teiles der Wärme aus dem Gießprozeß, wodurch das aus dem Stand der Technik bekannte für KO-Blech notwendige Warmhalten der Brammen in beheizten Öfen und die Brammenwiedererwärmung auf hohe Temperaturen im Stoßofen oder Hubbalkenofen entfällt. Die an deren Stelle tretende Glühbehandlung in einem Ausgleichsofen hat die Aufgabe, über die gesamte Dicke der Dünnbramme eine definierte homogene Temperatur einzustellen. Aufgrund ihrer geringen Dicke benötigen Dünnbrammen dazu wesentlich weniger Zeit als dies bei herkömmlichen Brammen mit Dicken von 100 bis 300 mm der Fall ist. Auf diese Weise werden verglichen mit dem Stand der Technik erhebliche Energiemengen sowie Wiedererwärmungszeit eingespart.

Des weiteren entfällt wegen der geringen Brammendicke das in den Brammenerwärmungsprozeß eingeschobene Prerolling zur Gefügehomogenisierung sowie das Vorwalzen zum Beginn des Warmbandwalzprozesses. Damit werden eine erhebliche Verkürzung des Herstellungsweges, direkte Kosteneinsparungen und Kapazitätserhöhungen in der Warmbandstraße zur Herstellung anderer Flachstahlprodukte erreicht.

Die erwähnte Verkürzung des Herstellungsweges setzt sich teilweise noch in die späteren Verarbeitungsstufen fort, denn bei der hier beschriebenen Arbeitsweise sind zusätzlich geringere Warmbanddicken als herkömmlich einstellbar bis hinunter zu 0,5 mm, wodurch das bisher z.T. praktizierte mehrstufige Kaltwalzen nicht mehr zwingend notwendig ist und nur noch einstufig kaltgewalzt werden kann.

Um in erfindungsmäßiger Weise die oben beschriebenen Vorteile aus dem Gieß-Walz-Prozeß für die Erzeugung von kornorientiertem Elektroblech nutzen zu können, müssen die Warmwalzparameter so gewählt werden, daß das Material genügend duktil bleibt. Versuche haben gezeigt, daß bei Vormaterial für kornorientiertes Elektroblech die Duktilität dann am größten ist, wenn der Strang nach der Erstarrung bis auf ca. 800 °C gekühlt wird, anschließend nur relativ kurz auf Ausgleichstemperatur, z.B. 1150 °C, verweilt und dabei homogen durcherwärmt wird. Eine optimale Warmwalzbarkeit eines solchen Materials ist gemäß einer vorteilhaften Ausgestaltung der Erfindung dann gegeben, wenn der erste Umformstich bei Temperaturen unterhalb von 1150 °C und mit einem Umformgrad von mindestens 20 % erfolgt und das Walzgut ab einer Zwischendicke von 40 bis 8 mm mittels Hochdruck-Zwischengerüst-Kühleinrichtungen innerhalb von höchstens zwei aufeinanderfolgenden Umformstichen auf Walztemperaturen von unterhalb 1000 °C gebracht wird. Dadurch läßt sich besonders sicher vermeiden, daß das Walzgut im für die Duktilität kritischen Temperaturbereich um 1000 °C umgeformt wird.

In Tabelle 1 ist die chemische Zusammensetzung von vier Stählen aufgeführt, die hinsichtlich ihrer Eignung für ein Warmwalzen in der erfindungsgemäßen Weise untersucht worden sind.

**Tabelle 1**

| Chemische Zusammensetzung in Masse-% | | | | | | | | |
|---|---|---|---|---|---|---|---|---|
| Stahl | C | Si | Mn | S | Al | N | Cu | Sn |
| A | 0,076 | 3,25 | 0,077 | 0,025 | 0,025 | 0,008 | 0,07 | 0,12 |
| B | 0,060 | 3,15 | 0,077 | 0,025 | 0,027 | 0,008 | 0,07 | 0,08 |
| C | 0,040 | 3,15 | 0,085 | 0,027 | 0,022 | 0,008 | 0,08 | 0,07 |
| D | 0,030 | 3,15 | 0,063 | 0,020 | <0,003 | <0,005 | - | - |

Die Untersuchungen wurden an 20 mm Rundzugproben ausgeführt, die im Mittenbereich kurzzeitig aufgeschmolzen und anschließend so abgekühlt wurden, wie dies einer 60-mm-Dünnbramme bei Gießgeschwindigkeiten (v_{g}) von 2,8 m/min bzw. von 4,5 m/min entspricht. Das Abkühlen wurde bei 800 °C beendet. Danach wurden die Proben nach einem Durchlaufofenzyklus auf Temperaturen (T_{w}) erwärmt und auf diesen unterschiedliche Zeiten (t_{w}) gehalten. Abschließend wurden die Proben dem Zugversuch bei der Temperatur T_{w} unterworfen.

Die Versuchsergebnisse sind in Tabelle 2 mitgeteilt.

**Tabelle 2**

| Heißzugversuche zur Ermittlung der Duktilität der Stähle im Gußzustand | | | | | | |
|---|---|---|---|---|---|---|
| | | | Stahl A | Stahl B | Stahl C | Stahl D |
| v_{g} | T_{w} | t_{w} | Z | Z | Z | Z |
| (m/min) | (°C) | (min) | (%) | (%) | (%) | (%) |
| 2,8 | 1130 | 0 | 49 | 73 | 72 | > 95 |
| 2,8 | 1130 | 50 | 33 | 45 | 60 | > 95 |
| 2,8 | 1050 | 12 | 45 | 52 | 67 | > 95 |
| 2,8 | 1000 | 17 | 24 | 47 | 59 | > 95 |
| | | | | | | > 95 |
| 4,5 | 1130 | 0 | 40 | 58 | 71 | |
| 4,5 | 1130 | 50 | 32 | 48 | 56 | > 95 |
| 4,5 | 1050 | 12 | 40 | 50 | 47 | > 95 |
| 4,5 | 1000 | 17 | 23 | 50 | 45 | > 95 |
| v_{g} = Gießgeschwindigkeit; | | | | | | |
| t_{w} = Haltezeit auf T_{w}; | | | | | | |
| T_{w} = Wärmtemperatur; | | | | | | |
| Z = Brucheinschnürung | | | | | | |

Die Brucheinschnürung ist die wesentliche Kenngröße für die Duktilität. Aus den Daten ist ersichtlich, daß die Stähle, abhängig von ihrer chemischen Zusammensetzung, mit unterschiedlicher Empfindlichkeit auf die jeweiligen Beanspruchungszyklen reagieren. Stahl D zeigt die geringsten, Stahl A die höchsten Einbußen an Brucheinschnürung bzw. an Duktilität.

Die Wirksamkeit der erfindungsgemäßen Maßnahmen lassen sich bei Stahl A am eindrucksvollsten zeigen. Bei beiden Gießgeschwindigkeiten bewirken die Wärmtemperaturen von 1130 °C und 1050 °C vergleichsweise gute Brucheinschnürungen, während 1000 °C Wärmtemperatur zu verminderter Duktilität führt. Letzteres gilt auch für ein Verlängern der Haltezeit auf Wärmtemperatur.

Der Wärmtemperaturbereich um 1000 °C ist für Stahl B in der vorgeschilderten Art untersucht worden. Das Ergebnis wird in Tabelle 3 gezeigt.

**Tabelle 3**

| Brucheinschnürung (Z) von Stahl B als Funktion der Wärmtemperatur (T_{w}) | | | | | | |
|---|---|---|---|---|---|---|
| T_{w} (°C) | 1100 | 1050 | 1000 | 950 | 900 | 850 |
| Z (%) | 65 | 50 | 45 | 55 | 60 | 65 |
| (v_{g} = 2,8 m/min; t_{w} = 20 min) | | | | | | |

Die Brucheinschnürungswerte in Tabelle 3 zeigen, daß die Duktilität des Stahles bei Temperaturen im Bereich von 1100 °C auf 1000 °C abfällt und bei Temperaturen unter 1000 °C wieder ansteigt.

Für eine vorteilhafte Anwendung des oben beschriebenen Gieß-Walz-Verfahrens zur Erzeugung von kornorientiertem Elektroblech muß weiterhin die Inhibitorphase in geeigneter Weise gebildet werden. Dazu werden hier drei prinzipielle Möglichkeiten in den Ansprüchen 3,4 und 5 aufgezeigt.

Die in Anspruch 3 genannte Möglichkeit geht davon aus, daß die Erstarrung nach dem Gießen verglichen mit dem vom Stand der Technik her bekannten Stranggießen recht schnell durchgeführt werden kann. Bei einem nur z.B. 65 mm dicken Strang kann die Wärme wesentlich schneller abgeführt werden als bei einem Strang mit z.B. 250 mm Dicke. Während in einer herkömmlichen dicken Bramme deshalb nur sehr grobe Sulfide, insbesondere MnS-Teilchen vorliegen, die nicht als Inhibitoren fungieren können, bietet die schnelle Abkühlung eines wesentlich dünneren Stranges bei richtiger Wahl der Gießgeschwindigkeit die Möglichkeit, Inhibitoren direkt nach dem Warmwalzen vorliegen zu haben.

Während der homogenen Durcherwärmung in dem Ausgleichsofen kann die vollständige Ausscheidung der sulfidischen Partikel erfolgen, wobei ein möglichst schneller Durchgang durch diesen Ofen anzustreben ist, damit die Partikel nicht zu sehr in ihrer Größe anwachsen. Dadurch würde die Inhibitorwirkung geschwächt. Ein auf diese Weise erzeugtes Warmband enthält dementsprechend bereits die fertige Inhibitorphase.

Damit die sulfidischen Inhibitorphasenteilchen möglichst feindispers ausgeschieden werden können, müssen der Mn-Gehalt im Bereich von 0,050 bis 0,100 % und der S-Gehalt im Bereich von 0,015 bis 0,035 % liegen. Jeweils zu geringe Anteile dieser Elemente verhindern eine ausreichende Substanzmenge für die Inhibitoren. Zu hohe Anteile bewirken die Ausscheidung zu grober Teilchen. Daher sollten die Anteile an Mn und S in den Grenzen von 0,05 bis 0,10 % Mn und 0,015 bis 0,035 % S liegen.

Es ist bei dieser Arbeitsweise nicht notwendig, ein mehrstufiges Kaltwalzen mit Zwischenglühung durchzuführen. Vielmehr kann die Warmbanddicke so niedrig eingestellt werden, daß die Weiterverarbeitung mit nur einer Kaltwalzstufe erfolgen kann. Dabei sollte der Kaltwalzgrad im Bereich von 45 bis 75 % liegen.

Zwar liegt ein erheblicher Vorteil des Verfahrens gerade darin, nicht mehrstufig kaltwalzen zu müssen. Es kann u.U. logistische Vorteile haben, nur Warmband einer fest gewählten Dicke herzustellen und die Kaltumformgrade je nach Anwendungsfall durch mehrstufiges Kaltwalzen anzupassen.

Das im Anspruch 3 angegebene Verfahren läßt deshalb auch ein mehrstufiges Kaltwalzen mit Zwischenglühung zu.

Anspruch 4 nennt eine vorteilhafterweise durchzuführende Glühung bei 800 bis 1100 °C. Alternativ hierzu kann die Haspeltemperatur auf kleiner gleich 900 °C eingestellt werden. Diese Glühung verbessert das Korngefüge im Warmband, insbesondere werden die oberflächennahen Gefügebereiche, die für die weiteren Verarbeitungsschritte wichtig sind, vergrößert. Zusätzliche Inhibitoren werden bei den vorgenannten Wärmebehandlungen nicht gebildet.

Anspruch 5 gibt ein Verfahren an, bei dem das Warmband noch nicht die Kornwachstumsinhibitoren in endgültiger Form enthält. Es ist vielmehr so beschaffen, daß es die Fähigkeit besitzt, während einer Ausgleichsglühung entsprechende Inhibitor-Partikel zu bilden. Als Inhibitoren kommen hierfür insbesondere Cu-Sulfid und Al-Nitrid in Frage. Diese Vorgehensweise hat den Vorteil, daß die Warmbanderzeugung (Gießen, Erstarren, Ausgleichsglühung, Warmwalzen) nicht auch noch auf eine optimale Bildung der Inhibitorphase optimiert werden muß, was zusätzliche Freiheitsgrade eröffnet. Allerdings muß die Abkühlrate des vergossenen Stranges so hoch gewählt werden, daß das Korngefüge der Dünnbramme nicht zu grob wird. Für diesen Zweck erweist es sich auch als sinnvoll, eine möglichst kurze Verweilzeit im Ausgleichsofen zu wählen. Die Ausscheidung der Inhibitor-Partikel erfolgt während einer Ausscheidungsglühung des Warmbandes bei 950 bis 1150 °C, die mit einer besonders schnellen Abkühlung beendet wird. Bei der Glühbehandlung werden die inhibitorphasenbildenden Elemente in Lösung gebracht, um dann bei der sehr schnellen Abkühlung, vorzugsweise mit Spritzwasser, mit ≥ 20 K/s die Inhibitorphase feindispers auszuscheiden. Diese Arbeitsweise ist möglich, weil Cu-Sulfide eine deutlich tiefere Löslichkeitstemperatur und eine schnellere Reaktionskinetik als z.B. MnS besitzen. Dasselbe gilt für AlN im Austenit. Deshalb ist auch die Anwendung höherer C-Gehalte als in Anspruch 3 zu empfehlen. Der C-Gehalt muß so hoch sein, daß eine Austenitumwandlung wenigstens in geringem Maße erfolgen kann. Wird er jedoch über 0,10 % gewählt, können Probleme mit der Entkohlbarkeit auftreten.

Der Kaltverformungsgrad kann mit 70 bis 90 % deutlich höher als bei dem Verfahren in Anspruch 3 angesetzt werden. Die dadurch eingebrachte höhere Energie und somit treibende Kraft zum sekundären Kornwachstum steht bei dem in Anspruch 5 angegebenen Verfahren einer entsprechend höheren Inhibitorwirkung gegenüber. Ähnlich wie beim HiB-Prozeß resultiert daraus eine bessere Texturselektion und somit eine schärfere Gosslage im fertigen Band und schließlich bessere magnetische Eigenschaften verglichen mit einem gemäß Anspruch 3 erzeugten Material.

Das Verfahren nach Anspruch 6 kennzeichnet einen Prozeß, bei dem ausschließlich AlN als Inhibitor verwendet wird. Sein Vorteil liegt in der praktisch vollständigen Vermeidung von Cu und S in der Schmelze, was die Warmwalzbarkeit erleichtert und die Sprödigkeit des Materials verringert. Ähnlich wie beim Verfahren nach Anspruch 3 werden durch die hohe Abkühlrate des vergossenen Stranges die in der Schmelze vorhandenen inhibitorbildenden Elemente (Al und N) teilweise an einer Ausscheidung gehindert. Eventuell doch ausgeschiedenene Teilchen haben nur eine geringe Größe. Die vollständige Ausscheidung erfolgt wie bei Anspruch 3 bei der homogenen Durcherwärmung im Ausgleichsofen.

Des weiteren kann dieses Warmband die Fähigkeit zur Ausscheidung weiterer AlN-Partikel, die als Inhibitoren wirken können, besitzen, wenn durch einen hinreichend hohen C-Gehalt sichergestellt ist, daß bei einer Ausscheidungsglühung des Warmbandes hinreichend Austenit entsteht. Die in einem solchen Material eingestellte Gesamtinhibitorwirkung hängt also davon ab, wie schnell die Abkühlung des Stranges erfolgt, wie viele wirksame Inhibitoren sich also spontan am Anfang bilden konnten. Weiterhin hängt sie davon ab, wieviele Inhibitoren bei der Ausscheidung des Warmbandes zusätzlich erzeugt wurden; dies hängt ganz wesentlich vom C-Gehalt ab. Je nachdem, wie stark diese Gesamtinhibitionswirkung nun ist, müssen unterschiedlich große Kaltverformungsgrade eingestellt werden.

Die Zugabe von bis zu 0,10 % Phosphor begünstigt stark eine feinstrukturierte Ausbildung des Erstarrungsgefüges, ohne daß bereits negative Effekte, etwa eine Versprödung des Materials, auftreten.

Die gemäß einer Ausgestaltung der Erfindung mögliche Einschränkung der Überhitzungstemperatur beim Gießen auf maximal 25 K oberhalb der Liquidustemperatur hat im Grunde dasselbe Ziel wie die voranstehend erläuterte Zugabe von Phosphor, nämlich die Struktur des Erstarrungsgefüges möglichst homogen und feinkörnig zu gestalten. Wird die Schmelze mit einer Temperatur vergossen, die nur sehr knapp oberhalb der Liquidustemperatur der entsprechenden Legierung liegt, entsteht ein weitgehend globulitisches Erstarrungsgefüge und das dendritische Wachstum wird eingeschränkt. Generell ist es bei der Erzeugung von kornorientiertem Elektroblech immer wichtig, ein möglichst feinstrukturiertes Erstarrungsgefüge einzustellen, damit zum einen die Textur- aber auch die Gefügeentwicklung möglichst homogen im Volumen der Bramme bzw. Dünnbramme ablaufen kann. Außerdem begünstigt ein möglichst feinstrukturiertes Gefüge in besonderer Weise die erwünschte feindisperse Ausscheidung der Inhibitorphase.

Eine Möglichkeit zur Verstärkung der Gesamtinhibitionswirkung besteht darin, durch eine Nitrierbehandlung des auf Fertigbanddicke kaltgewalzten Bandes in der Matrix zusätzliche AlN-Partikel zu bilden, von denen ein hinreichend großer Anteil in seiner Größe unterhalb von 100 nm liegt. Die auf diese Weise gebildeten zusätzlichen AlN-Partikel müssen auf jeden Fall vor Beginn der Sekundärrekristallisation in der Matrix entstehen, damit sie die Sekundärrekristallisation noch vorteilhaft beeinflussen können. Diese Nitrierbehandlung kann in der Aufheizphase zu Beginn der Hochtemperaturglühung erfolgen und z.B. durch eine stark stickstoffhaltige Glühatmosphäre bewirkt werden. Sie kann aber auch durch Zusätze zum überwiegend MgO enthaltenden Glühseparator bewirkt werden, wobei diese Zusätze aus Substanzen bestehen, die zu Beginn der Hochtemperaturglühung Stickstoff abgeben, der dann in die Matrix hineindiffundieren kann. Eine sehr wirkungsvolle Methode zur Nitrierung ist es in diesem Zusammenhang, eine entsprechende Verfahrensstufe am Ende der Entkohlungsglühung einzufügen, wobei Stickstoff aus dem Glühgas in das Band diffundieren kann.

An den Korngrenzen segregierende Elemente, wie As, Sn, Sb, Te und Bi in einer Menge von jeweils bis 0,2 % üben einen günstigen Einfluß zur Stabilisierung der Sekundärrekristallisation und zur Verschärfung der Goss-Textur aus.

## Patentansprüche

1. Verfahren zur Erzeugung von kornorientiertem Elektroblech,
- bei dem ein Stahl mit in Masse-%
2,5 bis 4,0 % Si,
0,01 bis 0,10 % C,
bis 0,30 % Cu,
bis 0,15 % Mn,
bis 0,060 % S,
bis 0,065 % Al,
bis 0,015 % N,
bis 0,10 % P, sowie gegebenenfalls zusätzlich mit jeweils bis zu 0,2 Masse-% von einem oder mehreren der Elemente As, Sn, Sb, Te und Bi und
als Rest Fe sowie unvermeidbare Verunreinigungen erschmolzen wird,
- bei dem diese Schmelze kontinuierlich in einer Dicke von 25 bis 100 mm zu einem Strang abgegossen wird, der im Zuge des Erstarrens auf eine Temperatur oberhalb von 700 °C abgekühlt und unmittelbar anschließend in Dünnbrammen zerteilt wird,
- bei dem diese Dünnbrammen dann einen in Linie stehenden Ausgleichsofen durchlaufen, in dem sie auf eine Temperatur ≤ 1170 °C erwärmt werden, wobei die Verweilzeit auf dieser Temperatur höchtens 60 min beträgt,
- bei dem die Dünnbrammen dann in einer in Linie stehenden mehrgerüstigen Warmwalzstraße kontinuierlich zu Warmband mit einer Dicke von 0,5 - 3,0 mm gewalzt werden, wobei der erste Umformstich bei einer Temperatur im Walzgut ≤ 1150 °C durchgeführt wird und mit einem Umformgrad von mindestens 20 % erfolgt,
- bei dem das Warmband anschließend gehaspelt wird,
- bei dem nachfolgend dieses Warmband ein- oder mehrstufig mit rekristallisierender Zwischenglühung auf eine Enddicke im Bereich von 0,15 bis 0,50 mm kaltgewalzt wird,
- bei dem das Kaltband dann rekristallisierend und entkohlend geglüht und mit einem überwiegend MgO enthaltenden Glühseparator versehen und danach zur Ausprägung einer Gosstextur schlußgeglüht wird, und
- bei dem das schlußgeglühte Kaltband mit einer elektrischen Isolierung beschichtet und spannungsfrei geglüht wird.

2. Verfahren nach Anspruch 1, **dadurch gekennzeichnet, daß** das Walzgut beim Warmwalzen ab einer Zwischendicke unterhalb 40 mm und bis zu einer Zwischendicke oberhalb 8 mm mittels Hochdruck-Kühleinrichtungen innerhalb von höchstens zwei aufeinanderfolgenden Umformstichen auf Temperaturen unterhalb von 1000°C gekühlt und auf Enddicke gewalzt wird.

3. Verfahren nach Anspruch 1 oder 2, **dadurch gekennzeichnet, daß** eine Stahlschmelze der Zusammensetzung nach Anspruch 1, jedoch mit Kohlenstoff, Mangan und Schwefel in folgenden Gehaltsgrenzen:
0,01 bis 0,050 % C,
0,05 bis 0,10 % Mn,
0,015 bis 0,035 % S,
zu Dünnbrammen vergossen und nach der Ausgleichsglühung auf eine Enddicke von 0,7 bis 1,3 mm warmgewalzt wird, und daß das Band in der letzten Kaltverformungsstufe mit einer Dickenreduktion im Bereich von 45 % bis 75 % kaltgewalzt wird.

4. Verfahren nach Anspruch 3, **dadurch gekennzeichnet, daß** das Warmband bei 800 bis 1100 °C geglüht wird oder daß es bei einer Temperatur kleiner gleich 900 °C gehaspelt wird.

5. Verfahren nach Anspruch 1 oder 2, **dadurch gekennzeichet**, **daß** Warmband aus einer Schmelze mit in Masse-%
2,5 bis 4,0 % Si,
0,03 bis 0,1 % C,
0,05 bis 0,10 % Mn,
0,015 bis 0,035 % S,
0,05 bis 0,3 % Cu,
0,015 bis 0,065 % Al,
0,005 bis 0,015 % N,
bis 0,10 % P,
sowie gegebenenfalls zusätzlich mit jeweils bis zu 0,2 Masse-% von einem oder mehreren der Elemente As, Sn, Sb, Te und Bi und
als Rest Eisen und unvermeidbare Verunreinigungen
zu Dünnbrammen vergossen und nach der Ausgleichsglühung auf eine Dicke von 0,5 - 3,0 mm warmgewalzt wird und bei 950 bis 1150 °C für 30 bis 300 s ausscheidungsgeglüht wird mit einer anschließenden beschleunigten Abkühlung mit einer Abkühlrate von mehr als 20 K/s, wobei diese Glühung vor der letzten Stufe der Kaltverformung mit einer Dickenreduktion von 70 % bis 90 % durchgeführt wird.

6. Verfahren nach Anspruch 1 oder 2, **dadurch gekennzeichnet, daß** eine Schmelze aus einem Stahl nach Anspruch 1, jedoch mit
maximal 0,010 % S,
maximal 0,010 % Cu,
mindestens 0,015 % Al,
mindestens 0,005 % N,
zu Dünnbrammen vergossen und auf eine Dicke von 0,5 - 3,0 mm warmgewalzt wird, und daß das Warmband bei 1000 °C bis 1150 °C für 30 bis 300 s ausscheidungsgeglüht wird mit einer anschließenden beschleunigten Abkühlung von mehr als 20 K/s, worauf in der letzten Kaltverformungsstufe eine Dickenreduktion von 45 % bis 90 % durchgeführt wird.

7. Verfahren nach einem der Ansprüche 1 bis 6,
**dadurch gekennzeichnet, daß**
die Stahlschmelze mit einer Überhitzungstemperatur von maximal 25 K über der Liquidustemperatur abgegossen wird.

8. Verfahren nach einem der Ansprüche 5 oder 6,
**dadurch gekennzeichnet, daß**
zusätzliche AlN-Partikel mit einer Korngröße von maximal 100 nm durch Nitrieren des auf Fertigbanddicke kaltgewalzten Bandes gebildet wird.

## Claims

1. Procedure for generating grain-oriented electric sheet,
- in which a steel with (in % w/w)
2.5 to 4.0 % Si,
0.01 to 0.10 % C,
up to 0.30 % Cu,
up to 0.15 % Mn,
up to 0.060 % S,
up to 0.065 % Al,
up to 0.015 % N,
up to 0.10 % P,
and, if necessary, up to 0.2 % w/w of one or more elements As, Sn, Sb, Te and Si, with Fe and unavoidable contaminants as the residue, is melted,
- in which this melt is continuously cast into a bar at a thickness of 25 to 100 mm, which is cooled while solidifying to a temperature above 700 °C, and divided into thin slabs immediately thereafter,
- in which these thin slabs then run through a serial compensating furnace, in which they are heated to a temperature ≤ 1170 °C, wherein they remain at this temperature for at most 60 min.,
- in which the thin slabs are then continuously rolled into hot strip with a thickness of 0.5 - 3.0 mm in a serial, multiple-stand hot-rolling line, wherein the first forming pass takes place at a temperature in the rolling stock of ≤ 1150 °C, and at a deformation degree of at least 20 %,
- in which the hot strip is subsequently coiled,
- in which this hot strip is then cold-rolled in one or more stages via recrystallizing intermediate annealing to a final thickness ranging from 0.15 to 0.50 mm,
- in which the cold strip is then subjected to recrystallizing and decarbonizing annealing, provided with an annealing separator containing primarily MgO, and then undergoes final annealing to produce a Goss-texture, and
- in which the finally annealed cold strip is coated with an electric insulation and is stress-free annealed.

2. Procedure according to claim 1, **characterized by** the fact that rolling stock is cooled to temperatures of under 1000 °C during hot-rolling at an intermediate thickness of under 40 mm and up to an intermediate thickness exceeding 8 mm via high-pressure cooling devices within at most two consecutive forming passes, and rolled to final thickness.

3. Procedure according to claim 1 or 2, **characterized by** the fact that a steel melt having the composition in claim 1, but with carbon, manganese and sulfur in the following content ranges:
0.01 to 0.050 % C,
0.05 to 0.10 % Mn,
0.015 to 0.035 % S,
is cast into thin slabs, and hot-rolled to a final thickness of 0.7 to 1.3 mm after compensation annealing, and that the strip is cold-rolled in the last cold forming stage with a thickness reduction ranging from 45 % to 75 %.

4. Procedure according to claim 3, **characterized by** the fact that the hot strip is annealed at 800 to 1100 °C, or that it is coiled at a temperature of less than or equal to 900 °C.

5. Procedure according to claim 1 or 2, **characterized by** the fact that hot strip consisting of a melt with (in % w/w):
2.5 to 4.0 % Si,
0.03 to 0.1 % C,
0.05 to 0.10 % Mn,
0.015 to 0.035 % S,
0.05 to 0.03 % Cu,
0.015 to 0.065 % Al,
0.005 to 0.015 % N,
up to 0.10 % P, and, if necessary, an additional 0.2 % w/w of one or more elements As, Sn, Sb, Te and Bi, with iron and unavoidable impurities as the residue, is cast into thin slabs, and hot-rolled to a thickness of 0.5 - 3.0 mm, and subjected to precipitation annealing at 950 to 1150 °C for 30 to 300 s, followed by accelerated cooling with a cooling rate of more than 20 K/s, wherein this annealing is performed before the last stage of cold forming with a thickness reduction of 70 % to 90 %.

6. Procedure according to claim 1 or 2, **characterized by** the fact that a melt consisting of a steel according to claim 1, but with
max. 0.010 % S,
max. 0.010 % Cu,
at least 0.015 % Al,
at least 0.005 % N,
is cast into thin slabs and hot-rolled to a thickness of 0.5 - 3.0 mm, and that the hot strip is precipitation annealed at 1000 °C to 1150 °C for 30 to 300 s, followed by accelerated cooling of more than 20 K/s, after which a thickness reduction of 45 % to 90 % is performed in the last cold forming stage.

7. Procedure according to one of claims 1 to 6, **characterized by** the fact that the steel melt is cast off at an superheating temperature of at most 25 K above the liquidus temperature.

8. Procedure according to one of claims 5 or 6, **characterized by** the fact that additional AlN particles with a maximal grain size of 100 nm are formed by nitrating the strip cold-rolled to finished strip thickness.

## Revendications

1. Procédé de fabrication d'une tôle électrique à grains orientés,
dans lequel on coule un acier comprenant
2,5 à 4,0 % Si,
0,01 à 0,10 % C,
jusqu'à 0,30 % Cu,
jusqu'à 0,15 % Mn,
jusqu'à 0,060 % S,
jusqu'à 0,065 % Al,
jusqu'à 0,015 % N,
jusqu'à 0,10 % P,
en % de masse,
ainsi que, comprenant, le cas échéant de façon supplémentaire, à chaque fois jusqu'à 0,2% en masse, un ou plusieurs des éléments As, Sn, Sb, Te et Bi et le reste étant du fer ainsi que des impuretés inévitables,
- dans lequel cette coulée est effectuée en continu en formant une brame d'une épaisseur de 25 à 100 mm, brame qui est, à la suite de la solidification, refroidie à une température au-dessus de 700°C et qui est immédiatement après divisée en des brames minces,
- dans lequel ces brames minces traversent ensuite un four d'homogénéisation disposé en ligne, dans lequel elles sont chauffées à une température inférieure ou égale à 1170°C, le temps de séjour à cette température s'élevant au maximum à 60 min,
- dans lequel les brames minces sont ensuite laminées dans un train de laminage à chaud, qui comporte plusieurs cages et qui est disposé en ligne , en formant un feuillard à chaud d'une épaisseur de 0,5 mm à 3,0 mm, la première passe de déformation étant effectuée à une température du matériau à laminer de ≤ 1150°C et conduisant à un taux de déformation d'au moins 20%,
- dans lequel le feuillard à chaud est ensuite bobiné,
- dans lequel ensuite ce feuillard à chaud est laminé à froid, en une étape ou en plusieurs étapes avec une soumission à un recuit intermédiaire de recristallisation, à une épaisseur finale située dans la plage de 0,15 à 0,50 mm,
- dans lequel le feuillard à froid est ensuite soumis à un recuit de recristallisation et de décarburation et est pourvu d'un séparateur de recuit, qui contient en majorité du MgO, et est ensuite soumis au recuit final afin de former une texture de Goss, et
- dans lequel le feuillard à froid qui a été soumis au recuit final est revêtu d'une isolation électrique et est soumis à un recuit de détensionnement.

2. Procédé selon la revendication 1, **caractérisé en ce que** le matériau à laminer, lors du laminage à chaud, à partir d'une épaisseur intermédiaire au-dessous de 40 mm et jusqu'à une épaisseur intermédiaire au-dessus de 8 mm, est refroidi à des températures au-dessous de 1000°C, au moyen de dispositifs de refroidissement à haute pression, et à l'intérieur d'au maximum deux passes de déformation successives et est laminée à l'épaisseur finale.

3. Procédé selon la revendication 1 ou 2,
**caractérisé en ce qu'**un acier de composition selon la revendication 1, mais comprenant du carbone, du manganèse et du soufre dans des limites de teneur suivantes :
0,01 à 0,050% C,
0,05 à 0,10 % Mn,
0,015 à 0,035 % S,
est coulé en formant des brames minces et, après le recuit d'homogénéisation, est laminé à chaud à une épaisseur finale de 0,7 à 1,3 mm, et **en ce que** le feuillard est laminé à froid, lors de la dernière étape de déformation à froid, avec une réduction d'épaisseur située dans la plage de 45% à 75%.

4. Procédé selon la revendication 3, **caractérisé en ce que** le feuillard à chaud est soumis à un recuit à des températures de 800 à 1100°C, ou **en ce qu'**il est bobiné à une température inférieure ou égale à 900°C.

5. Procédé selon la revendication 1 ou 2, **caractérisé en ce que** le feuillard à chaud est fabriqué, à partir d'une coulée comprenant
2,5 à 4,0 % Si,
0,03 à 0,1 % C,
0,05 à 0,10 % Mn,
0,015 à 0,035 % S,
0,05 à 0,3 % Cu,
0,015 à 0,065 % Al,
0,005 à 0,015 % N,
jusqu'à 0,10 % P,
en % de masse
ainsi que comprenant, le cas échéant, de façon supplémentaire à chaque fois jusqu'à 0,2% en masse un ou plusieurs des éléments As, Sn, Sb, Te et Bi et le reste étant du fer ainsi que des impuretés inévitables,
en formant des brames minces et, après le recuit d'homogénéisation, est laminé à chaud à une épaisseur de 0,5 à 3,0 mm et est soumis à un recuit de précipitation à une température de 950 à 1150°C pendant 30 à 300 s, suivi par un refroidissement successif accéléré présentant une vitesse de refroidissement supérieure à 20 K/s, ce recuit étant effectué avant la dernière étape de laminage à froid avec une réduction d'épaisseur de 70% à 90%.

6. Procédé selon la revendication 1 ou 2, **caractérisé en ce qu'**on coule un acier selon la revendication 1, mais comprenant
au maximum 0,010 % S,
au maximum 0,010 % Cu,
au moins 0,015 % Al,
au moins 0,005 % N,
en formant des brames minces et on le lamine à chaud à une épaisseur de 0,5 à 3,0 mm, et **en ce que** le feuillard à chaud est soumis à un recuit de précipitation à une température entre 1000°C et 1150°C pendant 30 à 300 s suivi par un refroidissement accéléré de plus de 20K/s, à la suite de quoi, lors de la dernière étape de déformation à froid, une réduction d'épaisseur de 45% à 90% est effectuée.

7. Procédé selon l'une quelconque des revendications 1 à 6, **caractérisé en ce que** la coulée de l'acier est effectuée avec une température de surchauffe d'au maximum 25 K au-dessus de la température de liquidus.

8. Procédé selon l'une des revendications 5 ou 6, **caractérisé en ce que** des particules d'AlN supplémentaires ayant une granulométrie d'au maximum 100 nm, sont formées par nitruration sur le feuillard laminé à froid qui présente l'épaisseur finale du feuillard.
